# EUROPÄISCHE PATENTSCHRIFT

(11) **EP 4 013 647 B1**
(45) Veröffentlichungstag und Bekanntmachung des Hinweises auf die Patenterteilung: **09.08.2023**
(21) Anmeldenummer: 20745123.8
(22) Anmeldetag: 20.07.2020
(51) Int. Cl.: B60P 7/08, G05B 19/416, G05B 19/418, G05D 1/02

(54) **FAHRZEUG ZUM TRANSPORTIEREN VON LADEGUT**
VEHICLE FOR TRANSPORTING CARGO
VÉHICULE DE TRANSPORT DE CARGAISON

(30) Priorität: 16.08.2019 DE 102019122052
(43) Veröffentlichungstag der Anmeldung: 22.06.2022
(73) Patentinhaber: Fraunhofer-Gesellschaft zur Förderung der angewandten Forschung e.V., 80686 München (DE)
(72) Erfinder: BEHLING, Jan, 80686 München (DE); ROTGERI, Mathias, 80686 München (DE); EMMERICH, Jan, Sören, 80686 München (DE); HÖNING, Dirk, 80686 München (DE); KLOKOWSKI, Patrick, 80686 München (DE); HAMMERMEISTER, Christian, 80686 München (DE); TEN HOMPEL, Michael, 80686 München (DE)
(74) Vertreter: Meinke, Jochen
(86) Internationale Anmeldenummer: PCT/EP2020/070407
(87) Internationale Veröffentlichungsnummer: WO 2021/032383

(56) Entgegenhaltungen:
- EP-A1- 2 093 642
- CN-A- 105 538 326
- CN-U- 208 018 986
- DE-A1-102005 049 159
- DE-A1-102008 030 546
- DE-U1-202012 010 247

## Beschreibung

Die Erfindung betrifft ein Fahrzeug zum Transportieren von Ladegut mit einer Ladegutaufnahme, die auf einem Fahrwerk angeordnet ist, wobei die Ladegutaufnahme ein das Ladegut am Rand der Ladegutaufnahme sicherndes Haltelement aufweist und wobei eine Fahrzeugsteuerung vorgesehen ist.

Bei Transportsystemen, vor allem bei schnelleren Transportsystemen (Fahrerlose Transportfahrzeuge oder schienengeführte Systeme) ist es erforderlich, das Ladegut zu sichern, damit es bei Beschleunigungs-, Brems- und Kurvenmanövern nicht herunterfällt. Dabei werden an die Ladungssicherung widersprüchliche Anforderungen gestellt:
Einerseits soll eine zuverlässige Ladungssicherung zu allen Seiten gewährleistet sein, andererseits soll die Ladungssicherung möglichst einfach und damit kostengünstig sein und schließlich soll die Ladungssicherung möglichst kompatibel zu einfachen Lastübergabekonzepten sein sowie eine gute Zugänglichkeit zum Ladegut ermöglichen.

Zur Lösung dieser Probleme sind Fahrzeuge bekannt, die eine Ladegutaufnahme mit geringem Reibwert und eine formschlüssige Ladungssicherung aufweisen, die von einem am Rand der Ladegutaufnahme umlaufend angeordneten Blech als Halteelement gebildet sind. Des weiteren sind Fahrzeuge bekannt, bei denen die Ladungssicherung dadurch erfolgt, dass die Auflagefläche der Ladegutaufnahme einen hohen Reibwert aufweist, der ein ungewolltes Verrutschen des Ladegutes verhindert.

Grundsätzlich sind auch bewegliche seitliche formschlüssige Ladungssicherungselemente einsetzbar, die aktiviert und deaktiviert werden können, z.B. seitlich angebrachte und zu öffnende Klappen. Solche Ladungssicherungselemente sind jedoch aufwendig und damit nicht kostengünstig.

Aus DE 10 2008 030 546 A1 ist ein autonomes Förderfahrzeug bekannt, dessen Fahrbewegungen dem geladenen Frachtgut angepasst wird, so dass ein Verrutschen oder Herabfallen verhindert wird.

Aufgabe der Erfindung ist es, ein Fahrzeug zu schaffen, das eine zuverlässige Ladungssicherung mit möglichst geringem Aufwand und guter Zugänglichkeit zum Ladegut ermöglicht.

Diese Aufgabe wird bei einem Fahrzeug der eingangs bezeichneten Art erfindungsgemäß dadurch gelöst, dass sich das Haltelement nur über einen Teilbereich des Umfangs der Ladegutaufnahme erstreckt und um eine Vertikalachse drehbar ausgebildet ist, wobei die Fahrzeugsteuerung so eingerichtet ist, dass sie das Halteelement jeweils aufgrund einer aktuellen oder erwarteten Beschleunigung oder Verzögerung des Fahrwerks so zur aktuellen Fahrtrichtung um die Vertikalachse ausrichtet, dass sich das Halteelement wenigstens auf der Seite der Ladegutaufnahme befindet, auf welche sich das Ladegut nach Überwindung der Haftreibung zwischen der Oberfläche der Ladegutaufnahme und der Kontaktoberfläche des Ladegutes zubewegt. Das Halteelement kann dabei auch integraler Bestandteil der dann einstückig ausgebildeten Ladegutaufnahme sein. Diese ist dann z. B. schalenförmig ausgebildet, wobei sich das angeformte Halteelement nur über einen Teilbereich des Umfangs der Ladegutaufnahme erstreckt.

Die Ladungssicherung wird somit formschlüssig durch ein Halteelement erreicht, das sich nur über einen Teilbereich des Umfanges der Ladegutaufnahme erstreckt, z.B. nur an einer Seite der Ladegutaufnahme angeordnet ist. Dabei wird das Halteelement von der Fahrzeugsteuerung so durch Drehung um die Vertikalachse angeordnet, dass es sich immer an der Seite befindet, auf welche sich das Ladegut aufgrund einer Beschleunigung oder Verzögerung zu bewegt. Die Fahrzeugsteuerung steuert somit aktiv die Ausrichtung des Halteelementes, z.B. befindet sich das Halteelement bei erwarteter starker positiver Beschleunigung in Fahrtrichtung gesehen hinten, bei erwarteter starker Bremsung vorne und bei schneller Kurvenfahrt in Richtung der Fliehkraft seitlich außen. Dabei kann das Halteelement auf unterschiedliche Weise um die Vertikalachse gedreht werden.

Nach einer ersten bevorzugten Ausgestaltung ist vorgesehen, dass die Ladegutaufnahme um die Vertikalachse gegenüber dem Fahrwerk drehbar ist. Das Halteelement ist dabei fest mit der Ladegutaufnahme verbunden und die Ladegutaufnahme mit dem Halteelement wird von der Fahrzeugsteuerung so positioniert, dass sich das Halteelement an der richtigen Stelle befindet.

In einer zweiten bevorzugten Ausgestaltung ist vorgesehen, dass das Fahrwerk ein omnidirektionales Fahrwerk ist. Bei dieser Ausgestaltung wird das Fahrwerk selbst von der Fahrzeugsteuerung in die jeweilige Verdrehposition gesteuert, derart, dass sich das Halteelement in der richtigen Lage befindet, ohne dass es selbst gegenüber dem Fahrwerk verdreht wird.

Alternativ ist es grundsätzlich auch möglich, dass das Halteelement gegenüber der Ladegutaufnahme verdrehbar angeordnet ist. Auch Kombinationen der vorbeschriebenen Ausführungsformen sind möglich.

In weiterer vorteilhafter Ausgestaltung ist vorgesehen, dass die Fahrzeugsteuerung die jeweils erwartete Beschleunigung oder Verzögerung aus einem der Fahrzeugsteuerung bekannten Fahrtverlauf ermittelt. Bei einem vorzugsweise fahrerlosen Fahrzeug wird dann entweder der Fahrtverlauf in die Fahrzeugsteuerung eingegeben oder nur das Fahrtziel, woraus die Fahrzeugsteuerung den Fahrtverlauf selbst ermittelt. Anhand dieses Fahrtverlaufes und der dadurch bekannten Beschleunigungen oder Verzögerungen ist dann eine entsprechende Ausrichtung des Halteelementes durch die Fahrzeugsteuerung kontinuierlich möglich. Zusätzlich oder alternativ ist vorgesehen, dass die Fahrzeugsteuerung mit einem am Fahrzeug angeordneten Beschleunigungssensor verbunden ist und aufgrund der jeweils aktuellen, vom Beschleunigungssensor erfassten Beschleunigung oder Verzögerung die Ausrichtung des Halteelementes steuert.

In weiterer vorteilhafter Ausgestaltung ist vorgesehen, dass das Haltelement wenigstens bis auf das Niveau der Oberfläche der Ladegutaufnahme absenkbar ausgebildet ist, was eine gute Zugänglichkeit der Ladegutaufnahme zur Entnahme des Ladegutes oder zur Bestückung der Ladegutaufnahme mit Ladegut ermöglicht.

Das Halteelement kann dabei verschwenkbar an der Ladegutaufnahme oder ggf. auch am Fahrwerk (sofern omnidirektional) angelenkt sein oder alternativ vertikal verfahrbar.

Das Halteelement kann in Anpassung an die Ladegutaufnahme grundsätzlich jede beliebige Form aufweisen, vorzugsweise ist es querschnittlich C-förmig oder stegförmig ausgebildet.

Schließlich kann das Halteelement auch mehrteilig ausgebildet sein.

Die Erfindung ist nachstehend anhand der Zeichnung beispielhaft näher erläutert. Diese zeigt jeweils in perspektivischer Darstellung in
- Fig. 1: eine schematische Darstellung eines erfindungsgemäßen Fahrzeuges nach einer ersten Ausgestaltung,
- Fig. 2: eine schematische Darstellung eines Fahrzeuges nach einer zweiten Ausgestaltung,
- Fig. 3: eine schematische Darstellung eines Fahrzeuges nach einer dritten Ausgestaltung,
- Fig. 4: eine Explosionsdarstellung des Fahrzeuges nach Fig. 3,
- Fig. 5: das Fahrzeug nach Fig. 1 mit Halteelement in Ladesicherungsposition,
- Fig. 6: das Fahrzeug nach Fig. 5 mit durch Verschwenken abgesenktem Halteelement,
- Fig. 7: das Fahrzeug nach Fig. 5 mit abgewandeltem Halteelement in Ladesicherungsposition,
- Fig. 8: das Fahrzeug nach Fig. 7 mit vertikal nach unten verfahrenem Halteelement,
- Fig. 9: das Fahrzeug nach Fig. 3 während des Beschleunigens,
- Fig. 10: das Fahrzeug nach Fig. 9 in Normalfahrt,
- Fig. 11: das Fahrzeug nach Fig. 10 während einer Kurvenfahrt und
- Fig. 12: das Fahrzeug nach Fig. 11 nach Abschluss der Kurvenfahrt.

Ein vorzugsweise fahrerloses Fahrzeug zum Transport von Ladegut 1 ist in den Figuren allgemein mit 2 bezeichnet. Das Fahrzeug 2 weist eine flächige Ladegutaufnahme 3 auf, auf welcher das Ladegut 1 zum Transport angeordnet ist. Die Ladegutaufnahme 3 besteht z.B. aus Metall oder Kunststoff, ihre Oberfläche 3a ist eben und nicht mit einer zusätzlichen reibungserhöhenden Beschichtung od. dgl. versehen, um das Ladegut 1 auf einfache Weise, vorzugsweise von der Seite durch Verschieben, aufzunehmen bzw. abzugeben. Das Fahrzeug 2 weist darüber hinaus ein allgemein mit 4 bezeichnetes Fahrwerk auf, an dessen Unterseite Fahrrollen 5 bzw. Fahrräder angedeutet sind.

Bei den dargestellten Ausführungsbeispielen ist die Ladegutaufnahme 3 nicht direkt auf dem Fahrwerk 4 angeordnet, sondern zwischen der Oberseite des Fahrwerkes 4 und der Unterseite der Ladegutaufnahme 3 ist ein Zwischenkörper 6 angeordnet. Dieser Zwischenkörper 6 ist so gestaltet, dass die Ladegutaufnahme 3 über einen nicht dargestellten Schwenkantrieb um eine Vertikalachse 7 gegenüber dem Fahrwerk 4 drehbar ausgebildet ist. Dazu kann entweder der Zwischenkörper 6 drehbar gegenüber dem Fahrwerk 4 oder die Ladegutaufnahme 3 drehbar gegenüber dem Zwischenkörper 6 ausgebildet sein.

Zur Sicherung des Ladegutes 1 auf der Ladegutaufnahme 3 ist ein Halteelement 8 vorgesehen, das sich nur über einen Teilbereich des Umfanges der Ladegutaufnahme 3 erstreckt.

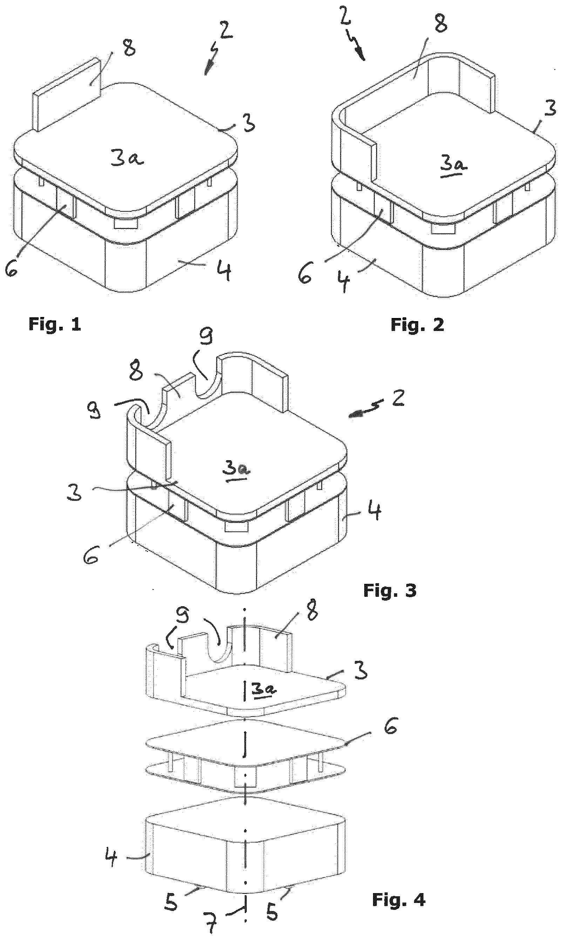

Beim Ausführungsbeispiel nach Fig. 1 ist das Halteelement 8 querschnittlich stegförmig ausgebildet und erstreckt sich nur an einer Seite der Ladegutaufnahme 3.

Alternativ kann gemäß Fig. 2 auch vorgesehen sein, dass das ebenfalls mit 8 bezeichnete Halteelement querschnittlich C-förmig ausgebildet ist, d.h. es ist gegenüber dem Halteelement 8 nach Fig. 1 in den Eckbereichen bogenförmig verlängert und erstreckt sich damit bereichsweise in die angrenzenden Seitenränder der Ladegutaufnahme 3.

Bei der Ausführungsform nach den Fig. 3 und 4 ist das Halteelement 8 ebenfalls querschnittlich C-förmig ausgebildet, weist jedoch zwei seitliche Aussparungen 9 auf. Diese Aussparungen 9 ermöglichen einen Zugang zur Ladegutaufnahme 3 auch von der Seite, an der sich das Halteelement 8 befindet.

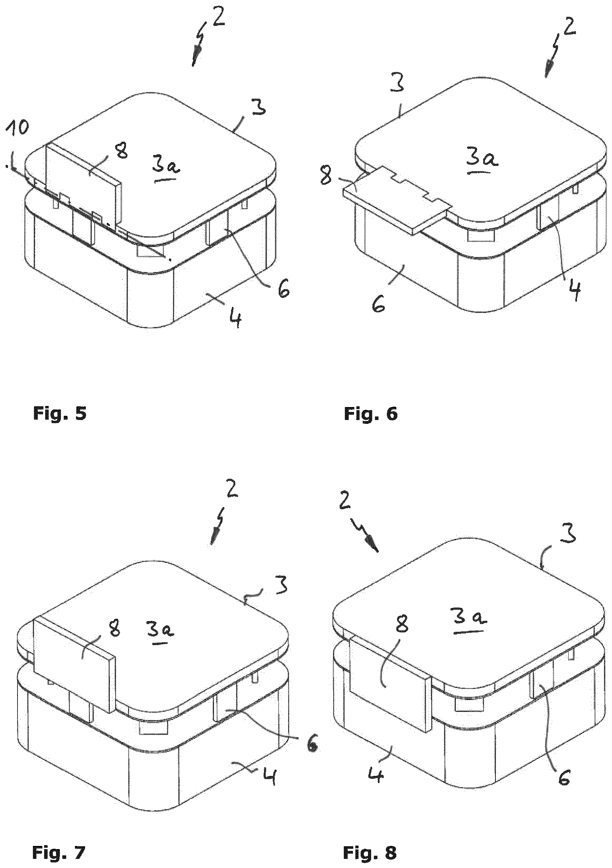

Das Halteelement 8 kann darüber hinaus auch wenigstens bis auf das Niveau der Oberfläche 3a der Ladegutaufnahme 3 absenkbar ausgebildet sein. Dazu ist bei der Ausführungsform nach den Fig. 5 und 6 das Halteelement 8 verschwenkbar an der Ladegutaufnahme 3 angeordnet, die Schwenkachse ist mit 10 bezeichnet.

Das Haltelement 8 kann alternativ auch am Zwischenkörper 6 oder am Fahrwerk 4 angelenkt sein, sofern das Fahrwerk 4 omnidirektional ist.

Von der in Fig. 5 dargestellten Fahrtposition, in welcher das Halteelement 8 seine Ladesicherungsfunktion erfüllt, kann das Halteelement 8 in die in Fig. 6 dargestellte Position auf das Niveau der Oberfläche 3a der Ladegutaufnahme 3 heruntergeschwenkt werden, wodurch ein ungehinderter Zugang zur Ladegutaufnahme 3 und damit zum Ladegut 1 auch von der Seite möglich ist, auf der sich das Halteelement 8 befindet.

Alternativ kann gemäß der Ausgestaltung nach den Fig. 7 und 8 vorgesehen sein, dass das Halteelement 8 vertikal verfahrbar an der Ladegutaufnahme 3 angeordnet ist. Das Halteelement 8 kann dann aus der Ladegutsicherungsposition bzw. Fahrtposition gemäß Fig. 7 vertikal abgesenkt werden und befindet sich dann in der in Fig. 8 dargestellten Lage. Das Haltelement 8 kann alternativ auch vertikal verfahrbar am Zwischenkörper 6 oder am Fahrwerk 4 angeordnet sein, sofern das Fahrwerk 4 omnidirektional ist.

Das Fahrzeug 1 weist eine nicht dargestellte Fahrzeugsteuerung auf, wie dies bei fahrerlosen, selbstfahrenden Fahrzeugen üblich ist. Die Fahrzeugsteuerung ist so eingerichtet, dass sie das Halteelement 8 jeweils aufgrund einer aktuellen oder erwarteten Beschleunigung oder Verzögerung des Fahrwerkes 4 so zur aktuellen Fahrtrichtung um die Vertikalachse 7 ausrichtet, dass sich das Halteelement 8 wenigstens auf der Seite der Ladegutaufnahme 3 befindet, auf welche sich das Ladegut 1 nach Überwindung der Haftreibung zwischen der Oberfläche 3a der Ladegutaufnahme 3 und der Kontaktoberfläche 1a des Ladegutes 1 zu bewegt. Dazu steuert die Fahrzeugsteuerung den nicht dargestellten Schwenkantrieb, der die Ladegutaufnahme 3 gegenüber dem Fahrwerk 4 bzw. den Zwischenkörper 6 um die Vertikalachse 7 verdrehen kann.

Alternativ kann auch vorgesehen sein, dass das Fahrwerk 4 ein omnidirektionales Fahrwerk ist. In diesem Falle steuert die Fahrzeugsteuerung die Fahrräder bzw. Fahrrollen 5 des Fahrwerkes 4 entsprechend, so dass sich das Fahrwerk 4 selbst um die Vertikalachse 7 in die erforderliche Position dreht mit der Folge, dass sich das Halteelement 8 dann ohne Relativdrehung zum Fahrwerk 4 in der richtigen Position befindet. Grundsätzlich ist es auch möglich, dass nur das Halteelement 8 gegenüber der Ladegutaufnahme 3 um die Vertikalachse 7 verdrehbar ausgebildet ist.

Die richtige Positionierung des Halteelementes 8 in Abhängigkeit vom Fahrweg kann auf unterschiedliche Weise realisiert werden. Die Fahrzeugsteuerung kann die jeweils erwartete Beschleunigung oder Verzögerung aus einem der Fahrzeugsteuerung bekannten Fahrtverlauf ermitteln. Dabei ist es möglich, dass in die Fahrzeugsteuerung nur ein Fahrtziel eingegeben wird. Dann ermittelt die Fahrzeugsteuerung selbst den Fahrtverlauf und die daraus erwarteten Beschleunigungen oder Verzögerungen.

Alternativ kann auch der gesamte Fahrtverlauf in die Fahrzeugsteuerung eingegeben bzw. in dieser gespeichert werden. Aus diesem bekannten Fahrtverlauf ermittelt die Fahrzeugsteuerung dann die jeweils erwarteten Beschleunigungen oder Verzögerungen und steuert das Halteelement 8 jeweils in die aktuell erforderliche Verdrehposition.

Zusätzlich oder alternativ kann die Fahrzeugsteuerung mit einem am Fahrzeug 1 angeordneten Beschleunigungssensor verbunden sein, der nicht dargestellt ist. Die Fahrzeugsteuerung steuert dann aufgrund der jeweils aktuellen, vom Beschleunigungssensor erfassten Beschleunigung oder Verzögerung die Ausrichtung des Halteelementes 8.

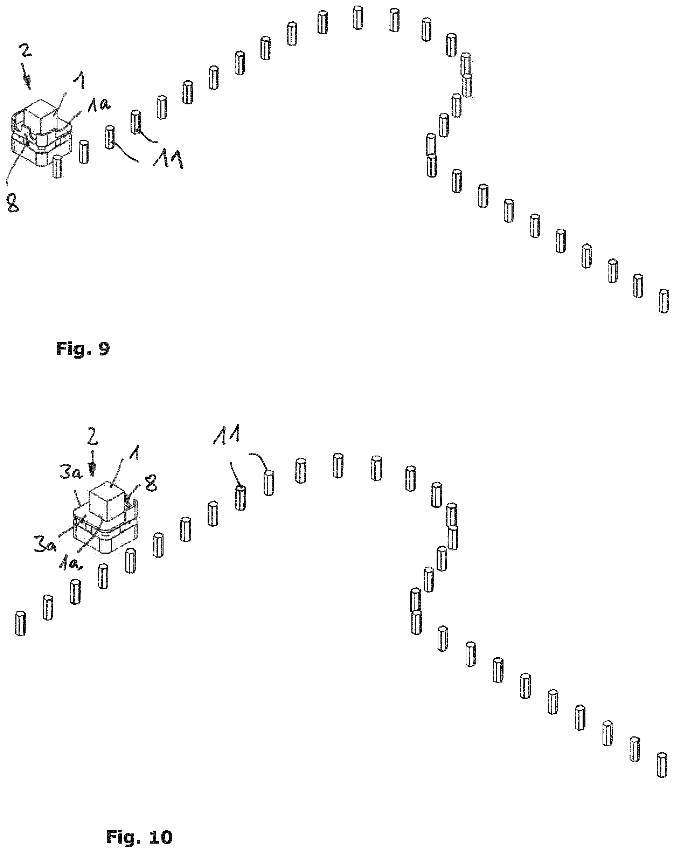

Zur weiteren Verdeutlichung sind in den Fig. 9 bis 12 verschiedene Fahrzustände dargestellt, wobei der Fahrtverlauf des Fahrzeuges 1 durch angedeutete Seitenpfosten 11 dargestellt ist. In der Fahrtposition nach Fig. 9 fährt das Fahrzeug 2 geradeaus und beschleunigt. Aufgrund dieser Beschleunigung hat das Ladegut 1 die Tendenz, sich auf der Ladegutaufnahme 3 nach hinten zu bewegen. Deshalb ist in dieser Position das Halteelement 8 so angeordnet, dass sie sich an der Rückseite des Fahrzeuges 1 befindet.

Fig. 10 zeigt eine Fahrposition ohne Beschleunigung oder Verzögerung, d.h. in Normalfahrt. In dieser Position befindet sich das Halteelement 8 an der Vorderseite der Ladegutaufnahme 3, so dass bei einem plötzlichen Brems- oder Kollisionsvorgang das Ladegut 1 nicht vorne herunterfallen kann.

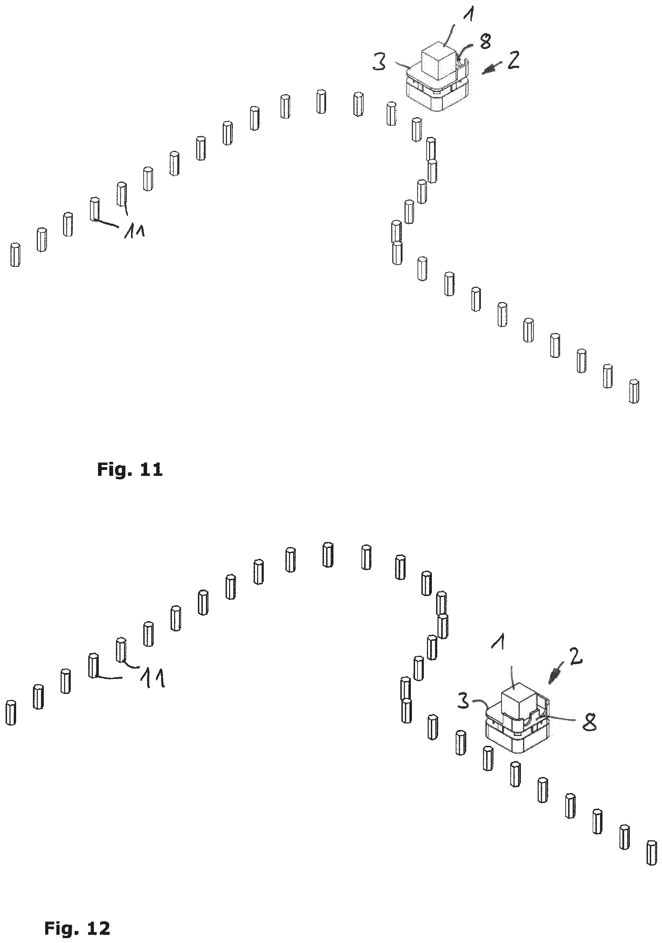

Fig. 11 zeigt eine Kurvenfahrt. Während der Kurvenfahrt befindet sich das Halteelement 8 an der kurvenäußeren Seite der Ladegutaufnahme 3, weil während der Kurvenfahrt nach Überwindung der Haftreibung das Ladegut 1 aufgrund der Fliehkraft die Tendenz hat, sich radial nach außen zu bewegen.

Fig. 12 zeigt eine Fahrsituation, in welcher die Kurvenfahrt beendet ist und das Fahrzeug 1 wieder normal geradeaus fährt. In dieser Position befindet sich das Halteelement 8 wieder vorne.

Natürlich ist die Erfindung nicht auf die dargestellten Ausführungsbeispiele beschränkt. Weitere Ausgestaltungen sind möglich, ohne den Grundgedanken zu verlassen. Das Halteelement 8 kann auch integraler Bestandteil der dann einstückig ausgebildeten Ladegutaufnahme 3 sein. Diese ist dann z. B. schalenförmig ausgebildet, wobei sich das angeformte Halteelement 8 nur über einen Teilbereich des Umfangs der Ladegutaufnahme 3 erstreckt.

### Bezuaszeichenliste:

- 1: Ladegut
- 1a: Kontaktoberfläche
- 2: Fahrzeug
- 3: Ladegutaufnahme
- 3a: Oberfläche
- 4: Fahrwerk
- 5: Fahrrollen
- 6: Zwischenkörper
- 7: Vertikalachse
- 8: Haltelement
- 9: Aussparungen
- 10: Schwenkachse
- 11: Seitenpfosten

## Patentansprüche

1. Fahrzeug zum Transportieren von Ladegut (1) mit einer Ladegutaufnahme (3), die auf einem Fahrwerk (4) angeordnet ist, wobei die Ladegutaufnahme (3) ein das Ladegut (1) am Rand der Ladegutaufnahme (3) sicherndes Haltelement (8) aufweist und wobei eine Fahrzeugsteuerung vorgesehen ist, und wobei sich das Halteelement (8) nur über einen Teilbereich des Umfangs der Ladegutaufnahme (3) erstreckt und **dadurch gekennzeichnet dass** das Halteelement um eine Vertikalachse (7) drehbar ausgebildet ist, wobei die Fahrzeugsteuerung so eingerichtet ist, dass sich das Halteelement (8) jeweils aufgrund einer aktuellen oder erwarteten Beschleunigung oder Verzögerung des Fahrwerks (4) so zur aktuellen Fahrtrichtung um die Vertikalachse (7) ausrichtet, dass sich das Halteelement (8) wenigstens auf der Seite der Ladegutaufnahme (3) befindet, auf welche sich das Ladegut (1) nach Überwindung der Haftreibung zwischen der Oberfläche (3a) der Ladegutaufnahme (3) und der Kontaktoberfläche (1a) des Ladegutes (1) zubewegt.

2. Fahrzeug nach Anspruch 1,
**dadurch gekennzeichnet,**
**dass** die Ladegutaufnahme (3) um die Vertikalachse (7) gegenüber dem Fahrwerk (4) drehbar ist.

3. Fahrzeug nach Anspruch 1 oder 2,
**dadurch gekennzeichnet,**
**dass** das Fahrwerk (4) ein omnidirektionales Fahrwerk ist.

4. Fahrzeug nach Anspruch 1, 2 oder 3,
**dadurch gekennzeichnet,**
**dass** die Fahrzeugsteuerung die jeweils erwartete Beschleunigung oder Verzögerung aus einem der Fahrzeugsteuerung bekannten Fahrtverlauf ermittelt.

5. Fahrzeug nach Anspruch 1, 2, 3 oder 4,
**dadurch gekennzeichnet,**
**dass** die Fahrzeugsteuerung mit einem am Fahrzeug (2) angeordneten Beschleunigungssensor verbunden ist und aufgrund der jeweils aktuellen, vom Beschleunigungssensor erfassten Beschleunigung oder Verzögerung die Ausrichtung des Halteelementes (8) steuert.

6. Fahrzeug nach einem oder mehreren der Ansprüche 1 bis 5,
**dadurch gekennzeichnet,**
**dass** das Haltelement (8) wenigstens bis auf das Niveau der Oberfläche (3a) der Ladegutaufnahme (3) absenkbar ausgebildet ist.

7. Fahrzeug nach Anspruch 6,
**dadurch gekennzeichnet,**
**dass** das Halteelement (8) verschwenkbar an der Ladegutaufnahme (3) oder dem Fahrwerk (4) angelenkt ist.

8. Fahrzeug nach Anspruch 6,
**dadurch gekennzeichnet,**
**dass** das Halteelement (8) vertikal verfahrbar an der Ladegutaufnahme (3) oder dem Fahrwerk (4) angeordnet ist.

9. Fahrzeug nach einem oder mehreren der Ansprüche 1 bis 8,
**dadurch gekennzeichnet,**
**dass** das Halteelement (8) querschnittlich C-förmig oder stegförmig ausgebildet ist.

10. Fahrzeug nach einem oder mehreren der Ansprüche 1 bis 9,
**dadurch gekennzeichnet,**
**dass** das Halteelement (8) mehrteilig ausgebildet ist.

## Claims

1. Vehicle for transporting cargo (1), having a cargo receiving portion (3)
which is arranged on a chassis (4), wherein the cargo receiving portion (3) has a retaining element (8) that secures the cargo (1) at the edge of the cargo receiving portion (3) and wherein a vehicle control system is provided,
and wherein the retaining element (8) extends only over a partial region of the perimeter of the cargo receiving portion (3), and **characterised in that** the retaining element is designed to rotate about a vertical axis (7),
wherein the vehicle control system is configured such that, as a result of each current or expected acceleration or deceleration of the chassis (4), the retaining element (8) is oriented about the vertical axis (7), relative to the current direction of travel, such that the retaining element (8) is at least on the side of the cargo receiving portion (3) towards which the cargo (1) moves after overcoming the static friction between the surface (3a) of the load receiving portion (3) and the contact surface (1a) of the cargo (1).

2. Vehicle according to claim 1,
**characterised in that**
the cargo receiving portion (3) can be rotated about the vertical axis (7) relative to the chassis (4).

3. Vehicle according to claim 1 or 2,
**characterised in that**
the chassis (4) is an omni-directional chassis.

4. Vehicle according to claim 1, 2 or 3,
**characterised in that**
the vehicle control system determines the acceleration or deceleration to be expected, in each instance, from a route known to the vehicle control system.

5. Vehicle according to claim 1, 2, 3 or 4,
**characterised in that**
the vehicle control system is connected with an acceleration sensor arranged on the vehicle (2), and controls the orientation of the retaining element (8) on the basis of the current acceleration or deceleration, in each instance, as detected by the acceleration sensor.

6. Vehicle according to one or more of claims 1 to 5,
**characterised in that**
the retaining element (8) is designed so that it can be lowered at least to the level of the surface (3a) of the cargo receiving portion (3).

7. Vehicle according to claim 6,
**characterised in that**
the retaining element (8) is articulated onto the cargo receiving portion (3) or the chassis (4) so as to pivot.

8. Vehicle according to claim 6,
**characterised in that**
the retaining element (8) is arranged on the cargo receiving portion (3) or the chassis (4) so as to be vertically displaceable.

9. Vehicle according to one or more of claims 1 to 8,
**characterised in that**
the retaining element (8) has a C-shaped or rib-shaped cross-section.

10. Vehicle according to one or more of claims 1 to 9,
**characterised in that**
the retaining element (8) is formed of multiple parts.

## Revendications

1. Véhicule pour le transport de marchandises (1) avec un réceptacle de marchandises (3),
qui est agencée sur un train de roulement (4), dans lequel le réceptacle de marchandises (3) présente un élément de retenue (8) fixant les marchandises (1) sur le bord du réceptacle de marchandises (3) et dans lequel une commande de véhicule est prévue,
et dans lequel l'élément de retenue (8) ne s'étend que sur une zone partielle de la périphérie du réceptacle de marchandises (3) et **caractérisé en ce que** l'élément de retenue est réalisé de manière à pouvoir tourner autour d'un axe vertical (7),
dans lequel la commande de véhicule est agencée de sorte que l'élément de retenue (8) s'oriente respectivement en raison d'une accélération ou d'une décélération actuelle ou attendue du train de roulement (4) par rapport à la direction de déplacement actuelle autour de l'axe vertical (7) de sorte que l'élément de retenue (8) se trouve au moins sur le côté du réceptacle de marchandises (3) vers lequel la marchandise (1) se déplace après dépassement du frottement statique entre la surface (3a) du réceptacle de marchandises (3) et la surface de contact (1a) de la marchandise (1).

2. Véhicule selon la revendication 1,
**caractérisé en ce que**
le réceptacle de marchandises (3) peut tourner autour de l'axe vertical (7) par rapport au train de roulement (4).

3. Véhicule selon la revendication 1 ou 2,
**caractérisé en ce que**
le train de roulement (4) est un train de roulement omnidirectionnel.

4. Véhicule selon la revendication 1, 2 ou 3,
**caractérisé en ce que**
la commande de véhicule détermine l'accélération ou la décélération respectivement attendue à partir d'un déroulement de trajet connu de la commande de véhicule.

5. Véhicule selon la revendication 1, 2, 3 ou 4,
**caractérisé en ce que**
la commande de véhicule est reliée à un capteur d'accélération agencé sur le véhicule (2) et commande l'orientation de l'élément de retenue (8) sur la base de l'accélération ou de la décélération respectivement actuelle, détectée par le capteur d'accélération.

6. Véhicule selon l'une quelconque ou plusieurs des revendications 1 à 5, **caractérisé en ce que**
l'élément de retenue (8) est formé de manière à pouvoir être abaissé au moins jusqu'au niveau de la surface (3a) du réceptacle de marchandises (3).

7. Véhicule selon la revendication 6,
**caractérisé en ce que**
l'élément de retenue (8) est articulé de manière pivotante sur le réceptacle de marchandises à charger (3) ou sur le train de roulement (4).

8. Véhicule selon la revendication 6,
**caractérisé en ce que**
l'élément de retenue (8) est agencé de manière à pouvoir être déplacé verticalement sur le réceptacle de marchandises (3) ou sur le train de roulement (4).

9. Véhicule selon l'une quelconque ou plusieurs des revendications 1 à 8,
**caractérisé en ce que**
l'élément de retenue (8) est formé en forme de C ou de barrette en section transversale.

10. Véhicule selon l'une quelconque ou plusieurs des revendications 1 à 9,
**caractérisé en ce que**
l'élément de retenue (8) est formé en plusieurs parties.
